# EUROPEAN PATENT APPLICATION

(11) **EP 4 629 414 A1**
(43) Date of publication of application: **08.10.2025**
(21) Application number: 25158446.2
(22) Date of filing: 18.02.2025
(51) Int. Cl.: H01M 50/209, H01M 50/507, H01M 50/509, H01M 10/42, H01M 10/48

(54) **BATTERY MODULE AND BATTERY PACK**

(30) Priority: 02.04.2024 CN 202420680874 U; 17.10.2024 WO PCT/CN2024/125558
(71) Applicant: Eve Energy Co., Ltd., Huizhou, Guangdong 516006 (CN)
(72) Inventor: DING, Xunfeng, Huizhou, Guangdong, 516006 (CN); ZHOU, Hongquan, Huizhou, Guangdong, 516006 (CN)
(74) Representative: Berggren Oy

(57) **Abstract**

A battery module (100) and a battery pack are provided. The battery pack (100) includes a mounting frame (110), a battery cell assembly (120), and a connecting assembly (130). The battery cell assembly (120) includes two battery cell groups along a first direction (X). Each of the two battery cell groups (121) includes battery cell units (1210) distributed along a second direction (Y). Each of the battery cell units (1210) includes two battery cells. Each of the battery cells (1211) includes a first pole post (1212) and a second pole post (1213). First pole posts (1212) of adjacent two of the battery cells (1211) are connected by a corresponding one of first connecting members (131). Second pole posts (1213) of the two battery cells (1211) of each of the battery cell units (1210) are connected by a corresponding one of second connecting members (132).

## Description

### TECHNICAL FIELD

The present disclosure relates to a field of battery technologies, and in particular, to a battery module and a battery pack.

### BACKGROUND

In related art, a plurality of rows of battery cells of a battery module are mounted inside a mounting frame. During charging and discharging processes, the battery cells may generate a large expansion force along an arrangement direction of the battery cells. The expansion force acts on end plates on both sides of the mounting frame along the arrangement direction of the battery cells and squeezes the end plates on both sides of the mounting frame to generate bending deformation, resulting in displacement of the battery cells along the arrangement direction.

However, since an anti-deformation ability of middle parts of the end plates on both sides of the mounting frame is weak, the middle parts of the end plates on both sides of the mounting frame may generate relatively great bending deformation under the action of the expansion force. Pole posts of the battery cells corresponding to the middle parts of the end plates on both sides of the mounting frame may generate relatively great displacement. The pole posts may be subjected to a relatively great shear force or torque, and the pole posts of the battery cells are prone to be damaged.

### SUMMARY

In a first aspect, a battery pack is provided by the present disclosure. The battery pack includes a mounting frame, a battery cell assembly, and a connecting assembly.

The battery cell assembly includes two battery cell groups distributed inside the mounting frame along a first direction. Each of the two battery cell groups includes a plurality of battery cell units sequentially distributed along a second direction. Each of the battery cell units includes two battery cells sequentially distributed along the second direction. Each of the battery cells includes a first pole post and a second pole post distributed along the first direction. First pole posts of adjacent two of the battery cells distributed along the first direction are adjacent to each other, and the first direction and the second direction form an included angle.

The connecting assembly includes a plurality of first connecting members and a plurality of second connecting members. The first pole posts of the adjacent two of the battery cells distributed along the first direction are connected by a corresponding one of the first connecting members. Second pole posts of the two battery cells of each of the battery cell units are connected by a corresponding one of the second connecting members.

In a second aspect, a battery pack is provided by the present disclosure. The battery pack includes an outer housing and the battery pack mentioned above. The battery module includes a mounting frame, a battery cell assembly, and a connecting assembly. The battery cell assembly includes two battery cell groups distributed inside the mounting frame along a first direction. Each of the two battery cell groups includes a plurality of battery cell units sequentially distributed along a second direction. Each of the battery cell units includes two battery cells sequentially distributed along the second direction. Each of the battery cells includes a first pole post and a second pole post distributed along the first direction. First pole posts of adjacent two of the battery cells distributed along the first direction are adjacent to each other, and the first direction and the second direction form an included angle. The connecting assembly includes a plurality of first connecting members and a plurality of second connecting members. The first pole posts of the adjacent two of the battery cells distributed along the first direction are connected by a corresponding one of the first connecting members. Second pole posts of the two battery cells of each of the battery cell units are connected by a corresponding one of the second connecting members.

### BENEFICIAL EFFECTS

The beneficial effects of the present disclosure are illustrated below. In the battery module provided by the embodiments of the present disclosure, the first pole posts of the adjacent two of the battery cells distributed along the first direction are connected by the corresponding one of the first connecting members, and the second pole posts of the two battery cells of each of the battery cell units are connected by the corresponding one of the second connecting members, so that the plurality of battery cells of the battery cell assembly are connected in in series or in parallel by the plurality of first connecting members and the plurality of second connecting members of the connecting assembly. Moreover, expansion and displacement amount along the second direction of the first pole posts of the adjacent two of the battery cells distributed along the first direction is basically the same. After the first pole posts of the adjacent two of the battery cells distributed along the first direction are connected by the corresponding one of the first connecting members, the first pole posts of the adjacent two of the battery cells distributed along the first direction can drive the corresponding one of the first connecting members connected to the first pole posts to be displaced synchronously. A distance between two first pole posts connected to the corresponding one of the first connecting members remains basically unchanged, and an acting force between the corresponding one of the first connecting members and the two first pole posts further remains basically unchanged. Therefore, when the first pole posts are subjected to a large shear force or torsion force after displacement of the first pole posts caused by expansion of the battery cells, the first pole posts can be prevented from being damaged.

In the battery pack provided by the embodiments of the present disclosure, the first pole posts of the adjacent two of the battery cells distributed along the first direction are connected by the corresponding one of the first connecting members, and the second pole posts of the two battery cells of each of the battery cell units are connected by the corresponding one of the second connecting members. After the battery cells expands, the first pole posts of the adjacent two of the battery cells distributed along the first direction can drive the corresponding one of the first connecting members connected to the first pole posts to be displaced synchronously. The distance between the two first pole posts connected to the corresponding one of the first connecting members remains basically unchanged, and the acting force between the corresponding one of the first connecting members and the two first pole posts further remains basically unchanged. Therefore, when the first pole posts are subjected to the large shear force or torsion force after the displacement of the first pole posts caused by the expansion of the battery cells, the first pole posts can be prevented from being damaged.

### BRIEF DESCRIPTION OF THE DRAWINGS

FIG. 1 is a schematic exploded structural diagram of a battery module according to some embodiments of the present disclosure.
FIG. 2 is a schematic assembling structural diagram of a battery cell assembly, a connecting assembly, and an acquisition circuit according to some embodiments of the present disclosure.
FIG. 3 is a schematic assembling structural diagram of a mounting frame, the battery cell assembly, the connecting assembly, and the acquisition circuit of a battery module according to some embodiments of the present disclosure.
FIG. 4 is a schematic exploded structural diagram of the mounting frame according to some embodiments of the present disclosure.

Reference numerals are as follows:
100, battery module; 110, mounting frame; 111, end plate; 1111, through hole; 112, side plate; 113, connecting plate; 114, adhesive layer; 115, cavity; 1151, sub-cavity; 120, battery cell assembly; 121, battery cell group; 1210, battery cell unit; 1211, battery cell; 1212, first pole post; 1213, second pole post; 130, connecting assembly; 131, first connecting member; 132, second connecting member; 140, acquisition circuit; 141, acquisition wire harness; 150, insulating plate; 151, first mounting groove; 152, second mounting groove; 153, first connecting hole; 154, second connecting hole; 155, connecting hole; X, first direction; Y, second direction.

### DETAILED DESCRIPTION

A plurality of battery cells of a battery module are mounted inside a mounting frame. The battery cells may expand and deform during charging and discharging processes. When the battery cells expand, a large expansion force may be generated along an arrangement direction of the plurality of battery cells. The expansion force acts on end plates on both sides of the mounting frame along the arrangement direction of the battery cells and squeezes the end plates to generate bending deformation, resulting in displacement of the battery cells along the arrangement direction of the battery cells. Correspondingly, pole posts of the battery cells may also generate displacement.

End parts of both sides of the mounting frame along the arrangement direction of the battery cells are connected to other structures of the mounting frame. The other structures of the mounting frame will apply a tension force to the end parts of both sides of the mounting frame to limit bending deformation amount of the end parts of both sides of the mounting frame, so that an anti-deformation ability of the end parts of both sides of the mounting frame is strong, and an anti-deformation ability of middle parts of both sides of the mounting frame is weak. When both sides of the mounting frame are squeezed by the expansion force of the battery cells, the middle parts of the end plates on both sides of the mounting frame may generate relatively great bending deformation, so that the pole posts of the battery cells corresponding to the middle parts of the end plates on both sides of the mounting frame may generate relatively great displacement.

In particular, when the battery module includes two parallel rows of the battery cells arranged in parallel, a position between the two parallel rows of the battery cells corresponds to the middle parts of both sides of the mounting frame. As a result, when the battery cells expand, the end parts of the two rows of the battery cells adjacent to each other may generate relatively great displacement along the arrangement direction of the battery cells. Moreover, the closer the battery cells to both sides of the mounting frame, the greater the displacement of the end parts of the battery cells corresponding to the middle parts of both sides of the mounting frame. Correspondingly the greater the displacement generated by the pole posts located at one end of the battery cells corresponding to the middle parts of both sides of the mounting frame, a distance between the pole posts located at one end of adjacent two of the battery cells corresponding to the middle parts of both sides of the mounting frame is further increased along the arrangement direction of the battery cells.

Taking a mounting frame formed by end plates and side plates in related art as an example, the mounting frame includes two end plates and two side plates. The two end plates are opposite to each other along the arrangement direction of the plurality of battery cells. Each of the two side plates extends along the arrangement direction of the plurality of battery cells. Both ends of each of the two end plates are connected by a corresponding one of the two side plates. The enclosure of the two end plates and the two side plates form a cavity configured for mounting the plurality of battery cells. When the battery cells expand and apply an expansion force to the end plates, the end parts of the end plates are subjected to a tensile force of the side plates, while the middle parts of the end plates are not subjected to the tensile force of the side plates. The middle parts of the end plates may generate relatively great bending deformation than the end parts of the end plates, resulting in relatively great displacement at the position of the battery cells corresponding to the middle parts of the end plates.

However, in the related art, along the arrangement direction of the battery cells, the pole posts located at one end of adjacent two of the battery cells corresponding to the middle parts of both sides of the mounting frame are connected by a connecting sheet. When a distance between the two pole posts connected to the connecting sheet increases, the connecting sheet may apply a relatively large shear force or torque to the pole posts, and the pole posts of the battery cells are prone to be damaged.

In order to avoid the problems mentioned above, the embodiments of the present disclosure provide a battery module.

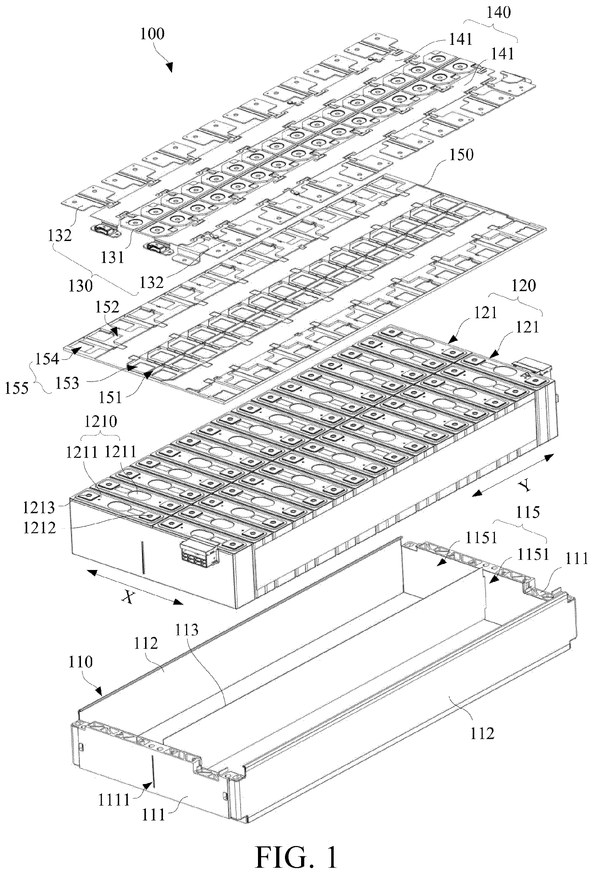

FIG. 1 is a schematic exploded structural diagram of a battery module according to some embodiments of the present disclosure. Referring to FIG. 1, a battery module 100 includes a mounting frame 110, a battery cell assembly 120, and a connecting assembly 130. The battery cell assembly 120 includes a plurality of battery cells 1211 arranged inside the mounting frame 110. Each of the battery cells 1211 includes a first pole post 1212 and a second pole post 1213. The connecting assembly 130 is configured to be electrically connected with first pole posts 1212 and second pole posts 1213 of the plurality of battery cells 1211 of the battery cell assembly 120, so that the plurality of battery cells 1211 are connected in series or in parallel.

Referring to FIG. 1 to FIG. 3, the battery cell assembly 120 includes two battery cell groups 121 distributed inside the mounting frame along a first direction X. Each of the two battery cell groups 121 includes a plurality of battery cell units 1210 sequentially distributed along a second direction Y. Each of the battery cell units 1210 includes two battery cells 1211 sequentially distributed along the second direction Y. The first direction X and the second direction Y form an included angle. That is, the battery module 100 includes two rows of the battery cells 1211 arranged inside the mounting frame 110. The two rows of the battery cells 1211 are distributed along the first direction X. The battery cells 1211 in each row are sequentially arranged along the second direction Y. The first direction X may be perpendicular to the second direction Y, or the included angle formed by intersection of the first direction X and the second direction Y may be an acute angle.

It should be noted that the battery cell groups 121 may further include one or more independent battery cells 1211 in addition to the battery units 1210. The one or more independent battery cells are arranged along the second direction Y with the plurality of battery cell units 1210. In addition, the battery cell assembly 120 may include three, four, or more battery cell groups 121. A plurality of battery cell groups 121 are sequentially distributed inside the mounting frame 110 along the first direction X.

Each of the battery cells 1211 includes a first pole post 1212 and a second pole post 1213 distributed along the first direction X. As a result, a thickness direction of each of the battery cells 1211 is parallel to the second direction Y. Under a condition that the plurality of battery cells 1211 expand, the plurality of battery cells 1211 are displaced mainly along the second direction Y, thereby driving the first pole posts 1212 and the second pole posts 1213 of the battery cells 1211 to be displaced along the second direction Y.

It should be noted that a polarity of the first pole post 1212 is opposite to a polarity of the second pole post 1213. In some embodiments, the first pole post 1212 may be a positive pole post, and the second pole post 1213 may be a negative pole post. In other embodiments, the first pole post 1212 may be a negative pole post, and the second pole post 1213 may be a positive pole post. The polarity of the first pole post 1212 and the polarity of the second pole post 1213 may be determined according to a wiring method of the plurality of battery cells 1211 of the battery module 100.

Further referring to FIG. 1 to FIG. 3, the first pole posts 1212 of adjacent two of the battery cells 1211 distributed along the first direction X are adjacent to each other. The second pole posts 1213 of the adjacent two of the battery cells 1211 distributed along the first direction X are away from each other.

The first pole posts 1212 of the battery cells 1211 correspond to middle parts of both sides of the mounting frame 110, and the second pole posts 1213 of the battery cells 1211 correspond to an end part of both sides of the mounting frame 110. Under the condition that the battery cells 1211 expand, displacements generated by the first pole posts 1212 of the adjacent two of the battery cells 1211 distributed along the first direction X are the same, and the displacement generated by the first pole posts 1212 along the second direction Y is greater than displacement generated by the second pole posts 1213 along the second direction Y. Moreover, the closer the first pole posts 1212 of the battery cells 1211 is to both sides of the mounting bracket 110, the greater the displacement the first pole posts 1212 generates, so that a distance between the first pole posts 1212 of the adjacent two of the battery cells 1211 along the second direction Y is increased.

It should be noted that if the first pole posts 1212 of the adjacent two of the battery cells 1211 along the second direction Y are connected by a connecting sheet, the first pole posts 1212 of the adjacent two of the battery cells 1211 along the second direction Y are subjected to a relatively large shear force or torsion force, and the first pole posts 1212 of the battery cells 1211 are damaged.

In order to avoid the problems mentioned above, in some embodiments, the connecting assembly 130 includes a plurality of first connecting members 131 and a plurality of second connecting members 132. The first pole posts 1212 of the adjacent two of the battery cells 1211 distributed along the first direction X are connected by a corresponding one of the first connecting members 131. The second pole posts 1213 of the two battery cells 1211 of each of the battery cell units 1210 are connected by a corresponding one of the second connecting members 132.

As a result, the plurality of battery cells 1211 of the battery cell assembly 120 can be connected in series or in parallel by the plurality of first connecting members 131 and second connecting members 132 of the connecting assembly 130. Moreover, expansion and displacement amounts of the first pole posts 1212 of the adjacent two of the battery cells 1211 distributed along the first direction X are the same. After the first pole posts 1212 of the adjacent two of the battery cells 1211 distributed along the first direction X are connected by the first connecting member 131, the first pole posts 1212 of the adjacent two of the battery cells 1211 distributed along the first direction X can drive the corresponding one of the first connecting members 131 connected to the first pole posts 1212 to be displaced synchronously. That is, under the condition that the battery cells 1211 expand, the distance between two first pole posts 1212 connected to the corresponding one of the first connecting members 131 remains basically unchanged, and an acting force between the corresponding one of the first connecting members 131 and the two first pole posts 1212 remains basically unchanged. Therefore, when the first pole posts are subjected to a relatively large shear force or torsion force after displacement of the first pole posts 1212 caused by expansion of the battery cells 1211, the first pole posts 1212 can be prevented from being damaged.

The plurality of first connecting members 131 of the connecting assembly 130 are arranged in a row along the second direction Y. A number of the plurality of first connecting members 131 is equal to a number of the battery cells 1211 of each of the battery cell groups 121. Some of the plurality of first connecting members 131 are electrically connected to a corresponding one of the first pole posts 1212 of the plurality of battery cells 1211 of one of the battery cell groups 121, and the other ones of the plurality of first connecting members 131 are electrically connected to a corresponding one of the first pole posts 1212 of the plurality of battery cells 1211 of the other one of the battery cell groups 121, so that the first pole posts 1212 of the adjacent two of the battery cells 1211 distributed along the first direction X are connected by the corresponding one of the first connecting members 131.

In some embodiments, polarities of the first pole posts 1212 of the adjacent two of the battery cells 1211 distributed along the first direction X are opposite. As a result, the adjacent two of the battery cells 1211 distributed along the first direction X can be connected in series through the corresponding one of the first connecting members 131. Among the two first pole posts 1212 connected to the corresponding one of the first connecting members 131, one of the two first pole posts 1212 is a positive pole post, and the other one of the two first pole posts 1212 is a negative pole post, so that the two battery cells 1211 distributed along the first direction X are connected in series by the corresponding one of the first connecting members 131.

Similarly, polarities of the second pole posts 1213 of the two battery cells 1211 of each of the battery cell units 1210 are opposite. As a result, the two battery cells 1211 of each of the battery cell units 1210 are connected in series by the corresponding one of the second connecting members 132. Among the two second pole posts 1213 connected to the corresponding one of the second connecting members 132, one of the two second pole posts 1213 is a positive pole post, and the other one of the two second pole posts 1213 is a negative pole post, so that the two second pole posts 1213 of the two battery cells 1211 of each of the battery cell units 1210 are connected in series by the corresponding one of the second connecting members 132.

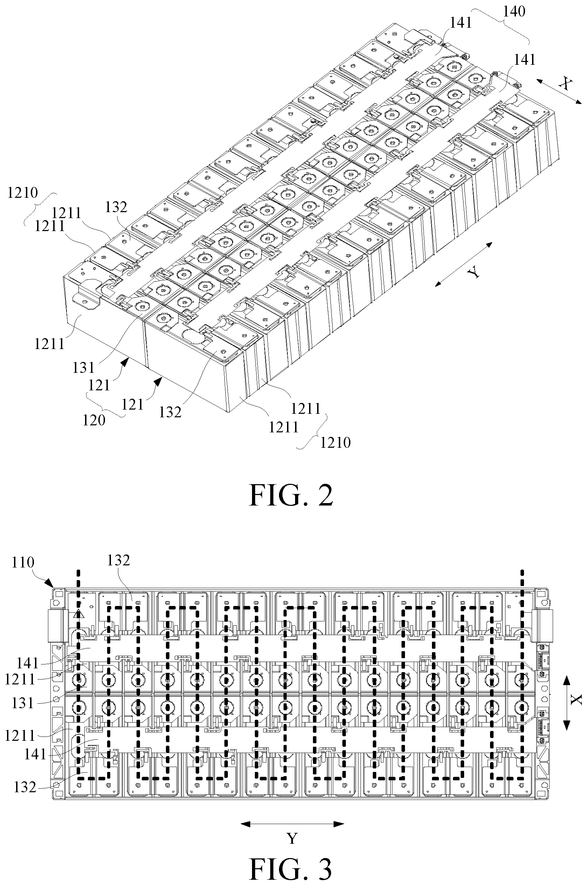

In some embodiments, the polarities of the first pole posts 1212 of the adjacent two of the battery cells 1211 distributed along the first direction X are opposite, and the polarities of the second pole posts 1213 of the two battery cells 1211 of each of the battery cell units 1210 are opposite. Moreover, the first pole posts 1212 of the adjacent two of the battery cells 1211 of two battery units 1210 of one of the two battery cell groups 121 are connected to the first pole posts 1212 of the adjacent two of the battery cells 1211 of two battery units 1210 of the other one of the two battery cell groups 121 by a corresponding one of two first connecting members 131, so that the plurality of battery cells 1211 of the two battery cell groups 121 are sequentially connected in series along a direction shown in dotted line in FIG. 3 by the plurality of first connecting members 131 and the plurality of second connecting members 132.

Referring to FIG. 1 to FIG. 3, the battery module 100 further includes an acquisition circuit 140 extending along the second direction Y. The plurality of first connecting members 131 and the plurality of second connecting members 132 are electrically connected with the acquisition circuit 140, respectively. As a result, voltage signals of the pole posts of each of the battery cells 1211 can be collected by the acquisition circuit 140.

In some embodiments, the acquisition circuit 140 includes two acquisition wiring harnesses 141 extending along the second direction Y. The two acquisition wiring harnesses 141 are distributed on both sides of the first connecting members 131 along the first direction X. Along the first direction X, each of the two acquisition wiring harnesses 141 is electrically connected with the second connecting members 132 and some of the first connecting members 131 located on both sides of a corresponding one of the two acquisition wiring harnesses 141.

Some of the plurality of first connecting members 131 is electrically connected to one of the two acquisition wiring harnesses 141, and the other ones of the plurality of first connecting members 131 is electrically connected to the other one of the two acquisition wiring harnesses 141, so that each of the first connecting members 131 is connected with the acquisition circuit 140.

In some embodiments, the first connecting members 131 arranged at intervals among the plurality of first connecting members 131 are electrically connected to one of the two acquisition wiring harnesses 141, and the other ones of the first connecting members 131 among the plurality of first connecting members 131 are electrically connected to the other one of the two acquisition wiring harnesses 141. In other embodiments, the adjacent first connecting members 131 among the plurality of first connecting members 131 are electrically connected to one of the two acquisition wiring harnesses 141, and the other ones of the first connecting members 131 among the plurality of first connecting members 131 are electrically connected to the other one of the two acquisition wiring harnesses 141.

Referring to FIG. 1, the battery module 100 further includes an insulating plate 150 covering the battery cell assembly 120. The connecting assembly 130 and the acquisition circuit 140 are arranged on a side of the insulating plate 150 facing away from the battery cell assembly 120, so that the battery cells 1211 of the battery cell assembly 120 are separated from the connecting assembly 130 and the acquisition circuit 140 to avoid short-circuit between the connecting assembly 130 or the acquisition circuit 140 and the battery cells 1211 of the battery cell assembly 120. The insulating plate 150 is provided with a plurality of connecting holes 155. Some of the connecting holes 155 are configured for electrically connecting the first connecting members 131 with the first pole posts 1212. In other embodiments, some of the connecting holes 155 are configured for electrically connecting the second connecting members 132 with the second pole posts 1213. The plurality of connecting holes 155 include first connecting holes 153 and second connecting holes 154 provided on the insulating plate 150. The first connecting holes 153 are configured for electrically connecting the first connection members 131 with the first pole posts 1212, and the second connecting holes 154 are configured for electrically connecting the second connection members 132 with the second pole posts 1213.

Specifically, each of the first connecting members 131 and the second connecting members 132 is arranged in a plate shape or a sheet shape. The side of the insulating plate 150 facing away from the battery cell assembly 120 is provided with first mounting grooves 151 for mounting the first connecting members 131. A bottom of each of the first mounting grooves 151 is provided with a corresponding one of the first connecting holes 153. Each of the first connecting members 131 is mounted inside a corresponding one of the first mounting grooves 151 and passes through the corresponding one of the first connecting holes 153 to be electrically connected with the first pole post 1212. The side of the insulating plate 150 facing away from the battery cell assembly 120 is provided with second mounting grooves 152 for mounting the second connecting members 132. A bottom of each of the second mounting grooves 152 is provided with a corresponding one of the second connecting holes 154. Each of the second connecting members 132 is mounted inside a corresponding one of the second mounting grooves 152 and passes through the corresponding one of the second connecting holes 154 to be electrically connected with the second pole post 1213. The first connecting members 131 and the second connecting members 132 may be fixedly connected to the pole posts of the battery cells 1211 together by welding.

Referring to FIG. 1, the mounting frame 110 includes two end plates 111 oppositely arranged along the second direction Y and two side plates 112 oppositely arranged along the first direction X. Each ends of the end plates 111 is connected to a corresponding one of ends of the two side plates 112 so as to enclose and form a cavity 115. The battery cell assembly 120 is arranged inside the cavity 115 of the mounting frame 110.

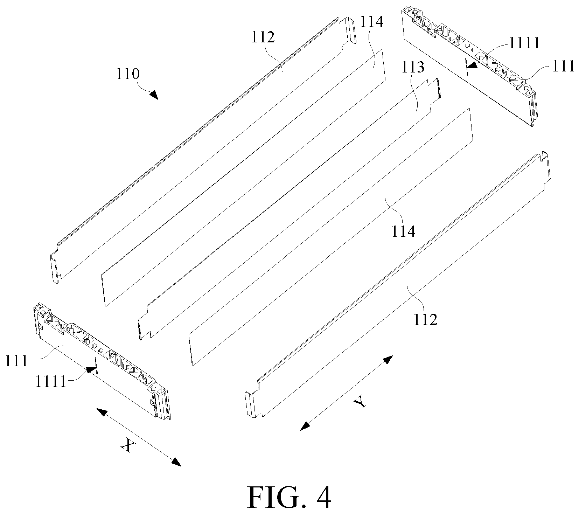

In some embodiments, referring to FIG. 1 and FIG. 4, the mounting frame 110 further includes a connecting plate 113 extending along the second direction Y. Both ends of the connecting plate 113 are respectively connected to the two end plates 111 along the second direction Y to divide the cavity 115 into two sub-cavities 1151. The two battery cell groups 121 are respectively arranged inside a corresponding one of the two sub-cavities 1151.

It should be understood that both ends of the connecting plate 113 are respectively connected to the two end plates 111 along the second direction Y to divide the cavity 115 into two sub-cavities 1151 for accommodating the battery cell groups 121, so that the connecting plate 113 can apply a tension force to the middle parts of the two end plates 111. Under the condition that the plurality of battery cells 1211 of the battery cell groups 121 expand and the middle parts of the end plates 111 are displaced along the second direction Y, the connecting plate 113 can apply the tension force to the middle parts of the end plates 111 to limit the deformation amount of the middle parts of the end plates 111, thereby limiting the displacement amount of the middle parts of the end plates 111, and further reducing the large shear force and torque subjected by the first pole posts 1212 of the battery cells 1211 due to the displacement.

In some embodiments, referring to FIG. 1 and FIG. 4, a side surface of the connecting plate 113 facing a corresponding one of the sub-cavities 1151 is provided with an adhesive layer 114. The adhesive layer 114 is bonded to side surfaces of the battery cells 1211. As a result, under the condition that the plurality of battery cells 1211 of the battery cell groups 121 expand, the connecting plate 113 can apply the tension force to the battery cells 1211 through the adhesive layer to prevent the displacement of the battery cells 1211, thereby reducing the displacement amount of the first pole posts 1212 of the battery cells 1211 along the second direction Y to some extent.

Specifically, side surfaces of the connecting plate 113 facing the two sub-cavities 1151 are provided with the adhesive layer 114, so that two side surfaces of the connecting plate 113 are both bonded to side surfaces of the plurality of battery cells 1211 of a corresponding one of the battery cell groups 121 through the adhesive layer 114.

In some embodiments, the connecting plate 113 and the end plates 111 may be welded to increase a connection stability between the ends of the connecting plate 113 and the end plates 111, so that the connecting plate 113 can apply the relatively large tension force to the middle parts of the end plates 111, thereby further improving a limiting effect on the deformation amount of the middle parts of the end plates 111.

Specifically, referring to FIG. 1 and FIG. 4, each of the end plates 111 is provided with a through hole 1111 penetrating a corresponding one of the end plates 111 along the second direction Y. Each end of the connecting plate 113 along the second direction Y penetrates through the through hole 1111 and protrudes from a side of the corresponding one of the end plates 111 facing away from the cavity 115. As a result, the end plates 111 and the connecting plate 113 can be welded together from the side of the corresponding one of the end plates 111 facing away from the cavity 115, so that the operation is more convenient. Certainly, the connecting plate 113 and the end plates 111 can further be connected together by screw connection, snap connection or other means, as long as the connecting plate 113 can apply the tension force to the end plates 111 to reduce the deformation amount of the middle parts of the end plates 111.

A battery pack is further provided by the embodiments of the present disclosure. The battery pack includes the battery module. A specific structure of the battery module can refer to the embodiments mentioned above. Since the battery pack adopts all the technical solutions of all the embodiments mentioned above, the battery pack at least has all beneficial effects brought by the technical solutions of the embodiments mentioned above, and will not be repeatedly described herein.

The battery pack may include an outer housing and the battery module. The battery module may be the battery module in any one of the embodiments mentioned above. The battery module is arranged inside the outer housing.

## Claims

1. A battery module (100), **characterized in that** the battery module (100) comprises:
a mounting frame (110);
a battery cell assembly (120) comprising two battery cell groups distributed inside the mounting frame (110) along a first direction (X), wherein each of the two battery cell groups (121) comprises a plurality of battery cell units (1210) sequentially distributed along a second direction (Y), each of the battery cell units (1210) comprises two battery cells (1211) sequentially distributed along the second direction (Y), each of the battery cells (1211) comprises a first pole post (1212) and a second pole post (1213) distributed along the first direction (X), first pole posts (1212) of adjacent two of the battery cells (1211) distributed along the first direction (X) are adjacent to each other, and the first direction (X) and the second direction (Y) form an included angle; and
a connecting assembly (130) comprising a plurality of first connecting members (131) and a plurality of second connecting members (132), the first pole posts (1212) of the adjacent two of the battery cells (1211) distributed along the first direction (X) are connected by a corresponding one of the first connecting members (131), and second pole posts (1213) of the two battery cells (1211) of each of the battery cell units (1210) are connected by a corresponding one of the second connecting members (132).

2. The battery module according to claim 1, **characterized in that** polarities of the first pole posts (1212) of the adjacent two of the battery cells (1211) distributed along the first direction (X) are opposite, and polarities of the second pole posts (1213) of the two battery cells (1211) of each of the battery cell units (1210) are opposite.

3. The battery module according to claim 2, **characterized in that** one of the two battery cell groups (121) further comprises two independent battery cells (1211) located on both sides of the plurality of battery cell units (1210) along the second direction (Y); or
wherein each of the two battery cell groups (121) further comprises one independent battery cell (1211), the independent battery cell (1211) of one of the two battery cell groups (121) is located on one side of the plurality of battery cell units (1210) along the second direction (Y), and the independent battery cell (1211) of the other one of the battery cell groups (121) is located on the other side of the plurality of battery cell units (1210) along the second direction (Y).

4. The battery module according to claim **1, characterized in that** the battery module (100) further comprises:
an acquisition circuit (140) extending along the second direction (Y), wherein the plurality of first connecting members (131) and the plurality of second connecting members (132) are electrically connected with the acquisition circuit (140), respectively.

5. The battery module according to claim 4, **characterized in that** the acquisition circuit (140) comprises two acquisition wiring harnesses (141) extending along the second direction (Y) and distributed on both sides of the first connecting members (131) along the first direction (X), and along the first direction (X), each of the two acquisition wiring harnesses (141) is electrically connected with the second connecting members (132) and some of the first connecting members (131) located on both sides of a corresponding one of the two acquisition wiring harnesses (141).

6. The battery module according to claim 5, **characterized in that** some of the plurality of first connecting members (131) is electrically connected to one of the two acquisition wiring harnesses (141), and the other ones of the plurality of first connecting members (131) is electrically connected to the other one of the two acquisition wiring harnesses (141).

7. The battery module according to claim 6, **characterized in that** the first connecting members (131) arranged at intervals among the plurality of first connecting members (131) are electrically connected to one of the two acquisition wiring harnesses (141), and the other ones of the first connecting members (131) among the plurality of first connecting members (131) are electrically connected to the other one of the two acquisition wiring harnesses (141).

8. The battery module according to claim 5, **characterized in that** the battery module (100) further comprises:
an insulating plate (150) covering the battery cell assembly (120), wherein the connecting assembly (130) and the acquisition circuit (140) are arranged on a side of the insulating plate (150) facing away from the battery cell assembly (120), and the insulating plate (150) is provided with a plurality of connecting holes (155);
wherein some of the connecting holes (155) are configured for electrically connecting the first connecting members (131) with the first pole posts (1212), or some of the connecting holes (155) are configured for electrically connecting the second connecting members (132) with the second pole posts (1213).

9. The battery module according to claim 8, **characterized in that** the connecting holes (155) comprises first connecting holes (153) and second connecting holes (154), and the side of the insulating plate (150) facing away from the battery cell assembly (120) is provided with first mounting grooves (151) and second mounting grooves (152);
wherein a bottom of each of the first mounting grooves (151) is provided with a corresponding one of the first connecting holes (153), and each of the first connecting members (131) is mounted inside a corresponding one of the first mounting grooves (151) and passes through the corresponding one of the first connecting holes (153) to be electrically connected with the first pole post (1212); and
wherein a bottom of each of the second mounting grooves (152) is provided with a corresponding one of the second connecting holes (154), and each of the second connecting members (132) is mounted inside a corresponding one of the second mounting grooves (152) and passes through the corresponding one of the second connecting holes (154) to be electrically connected with the second pole post (1213).

10. The battery module according to any one of claims 1-9, **characterized in that** the first connecting member (131) and the second connecting member (132) are arranged in a plate shape or a sheet shape.

11. The battery module according to any one of claims 1-9, **characterized in that** the mounting frame (110) comprises:
two end plates (111) oppositely arranged along the second direction (Y);
two side plates (112) oppositely arranged along the first direction (X), wherein both ends of the two end plates (111) is connected to a corresponding one of ends of the two side plates (112) to enclose a cavity (115); and
a connecting plate (113) extending along the second direction (Y), wherein both ends of the connecting plate (113) are respectively connected with the two end plates (111) along the second direction (Y) to divide the cavity (115) into two sub-cavities (1151), and the two battery cell groups (121) are respectively arranged inside a corresponding one of the two sub-cavities (1151).

12. The battery module according to claim 11, **characterized in that** a side surface of the connecting plate (113) facing the sub-cavities (1151) is provided with an adhesive layer (114) bonded to side surfaces of the battery cells (1211).

13. The battery module according to claim 11, **characterized in that** the connecting plate (113) is welded to the two end plates (111).

14. The battery module according to claim 13, **characterized in that** each of the two end plates (111) is provided with a through hole (1111) penetrating through a corresponding one of the end plates (111) along the second direction (Y), and each end of the connecting plate (113) along the second direction (Y) passes through the through hole (1111) and protrudes from a side of the corresponding one of the end plates (111) facing away from the cavity (115).

15. A battery pack, **characterized in that** the battery pack comprises:
an outer housing; and
a battery module according to any one of claims 1-14 arranged inside the outer housing.
